# EUROPEAN PATENT SPECIFICATION

(11) **EP 4 175 449 B1**
(45) Date of publication and mention of the grant of the patent: **26.06.2024**
(21) Application number: 21748659.6
(22) Date of filing: 01.07.2021
(51) Int. Cl.: A01B 3/46

(54) **MOUNTED REVERSIBLE PLOUGH**
DREHBARER ANBAUPFLUG
CHARRUE RÉVERSIBLE MONTÉE

(30) Priority: 01.07.2020 IT 202000015928
(43) Date of publication of application: 10.05.2023
(73) Proprietor: Maschio Gaspardo S.p.A., 35011 Campodarsego (PD) (IT)
(72) Inventor: MASCHIO, Andrea, 33075 Morsano Al Tagliamento (PN) (IT); MILAN, Federico, 30026 Portogruaro (VE) (IT); DE LORENZI, Massimo, 33079 Sesto al Reghena (PN) (IT)
(74) Representative: Locas, Davide
(86) International application number: PCT/IB2021/055911
(87) International publication number: WO 2022/003620

(56) References cited:
- DE-A1-102010 048 287
- DE-A1-102014 109 605
- DE-T2- 60 225 958

## Description

The present invention relates to a mounted reversible plough of a type including a wheel for adjusting the working depth of the plough.

Mounted reversible ploughs are normally provided in order to perform a 180° inversion of the frame of the plough about an inversion axis which is directed in the travel direction in order to bring the respective rows of ploughing elements to be alternatively operative on the ground to be ploughed depending on the position of the frame about the inversion axis.

These ploughs are normally provided with a support wheel which is in charge of adjusting the working depth of the ploughing elements. A need to provide a support wheel that allows to facilitate this adjustment is therefore felt.

In addition, it is evident that during the plough inversion phase the wheel must invert the working side. Normally, this inversion occurs due to the force of gravity during the rotation of the frame of the plough by 180° about the inversion axis. In this context, the technical problem of controlling the speed of descent of the wheel is felt in order to limit the mechanical stresses that are harmful to the structure of the plough and also reduce the risks associated with the safety of the operators.

DE 60225958 describes a reversible plough in which the oscillation of the wheel from one side of the frame of the plough to the other side is slowed down by a damper. The drawback of this solution is that the damper, especially when it is in the extended configuration, is dangerously exposed to accidental impacts from foreign bodies, such as stones, wood and the like, which can be thrown from the wheel and risk causing deformation or otherwise compromising the operation of the damper.

In addition, the solution known from DE 60225958 is not optimal due to the fact that the damper slows down the oscillation of the wheel from one side of the frame of the plough to the other side not only during the inversion of the frame but also during the transport of the plough. Therefore, during transport, the damper dangerously hinders the directional changes of the wheel, to the detriment of safety (think for example of a situation of bends in succession). Precisely for the sake of safety during transport, the damper must therefore have a very low damping, which, however, compromises the effectiveness thereof during the inversion of the frame.

Other examples of ploughs are described in DE 102010048287 or DE 102014109605.

Various attempts have been made to solve the problem of providing a mounted reversible plough including a wheel with an effective and durable depth adjustment. The problem presents obvious difficulties, due in part to the need to limit the number of additional components that add to the cost and complexity of the plough.

The technical problem underlying the present invention is that of realising a structurally mounted reversible plough and functionally designed to obviate at least in part one or more of the drawbacks complained of with reference to the state of the art.

This problem is solved by the invention by means of a plough made in accordance with one or more of the features of the appended claims.

It will be appreciated that the mounted reversible plough in accordance with the present invention comprises a frame and an attachment member for attaching the frame to a tractor. The frame carries at least a first ploughing element and at least a second ploughing element which are mutually opposing. In preferred embodiments, a plurality of first ploughing elements opposing to a plurality of second ploughing elements is provided.

Again preferentially, the frame is rotatably secured to the attachment member about an inversion axis in order to invert the frame.

It should be noted that, in this context, "inverting the frame" or "inverting the plough" means rotating the frame of the plough by about 180° about the inversion axis in order to bring the respective opposing ploughing elements to be alternately operative on the ground to be ploughed.

In some embodiments, it is also possible to rotate the frame about the inversion axis in a frame transport position corresponding to an intermediate frame rotation position where the opposing ploughing elements are operative on the ground.

The plough further comprises a wheel which is configured for adjusting the working depth of the plough in two opposing operating positions of the wheel in which the first ploughing element and the second ploughing element are operative, respectively. It will be appreciated that where it is possible to rotate the frame in a transport position, the wheel can be a combined wheel. It should be noted that, in this context, "combined wheel" preferably means a wheel which is connected to the frame of the plough and functionally suitable for combining the adjustment of the working depth of the plough and the at least partial support of the same during the transport phase.

It must be pointed out that, in some embodiments, an arm is provided which on the one hand supports the wheel and on the other hand is rotatably connected to a support of the frame about an oscillation axis which is transverse with respect to the inversion axis so as to allow an oscillation of the arm between the first and the second operating position of the wheel.

Preferably, the oscillation axis is perpendicular to the inversion axis. The oscillation of the arm during the inversion of the frame is slowed down by means of a damper.

The damper comprises a movable element which is kinematically connected or otherwise susceptible of kinematic connection to the arm during the inversion of the frame. The movable element is configured to slide along a support which extends longitudinally and the ends of which are preferably secured to the support so as to slow down the oscillation of the arm during the inversion.

In a more preferred example, the support is extended longitudinally between two opposing ends of the support which are rigidly secured to the support.

This structure gives the damper a greater strength.

Preferably, the support is a rod and the movable element is a sleeve of said rod.

The provision of a rod which is rigidly secured to the support allows the rod to be protected from any accidental impacts with foreign bodies to which an oscillating-type rod would instead be more exposed.

In some embodiments, the sleeve is extended longitudinally between two opposing ends of the sleeve itself and, preferably, the rod passes through both opposing ends of the sleeve.

It follows that, advantageously, the damper is not susceptible of elongation during operation and therefore is less vulnerable to possible failures.

It should be noted that, in this context, "sleeve" preferably means a hollow linear structure extending between two open ends of the structure itself so as to allow a rod to pass through said hollow linear structure. It will be appreciated that, in one aspect, the hollow linear structure of the sleeve has a cylindrical cross-section which is configured to receive within it a cylindrical cross-section of the rod.

It should be noted that, advantageously, the damper is of the type of a steering damper which, in a per se known manner, is used to dampen the rotation of the steering of a motorbike or a motor vehicle.

In some embodiments, a mechanical element is provided which is driven into rotation about the oscillation axis by the arm during the inversion. In this context, advantageously, the damper is configured so as to act counter the rotation of the mechanical element about the oscillation axis so as to slow down the oscillation of the arm.

It is preferred that the mechanical element is rotatably secured about the oscillation axis.

It is further preferred that the movable element of the damper is kinematically connected or is otherwise susceptible of kinematic connection to the arm during the inversion of the frame by means of the mechanical element.

Preferably, the movement of the wheel between the two opposing operating positions is driven by the effect of gravity during the inversion of the frame. Accordingly, the invention slows down the descent by gravity of the wheel during the inversion of the frame.

As already mentioned, according to a variant of the invention, the wheel is a combined wheel, the arm being configured to rotate about a repositioning axis which is perpendicular (or anyway transverse) to the oscillation axis in order to move said combined wheel between a first position in which the combined wheel is configured to adjust the working depth of the ploughing elements and a second position in which the combined wheel is configured to support the frame in a transport position.

It should be noted that, in this context, "first position" preferably means a position to be chosen between said first and said second operating position.

Preferably, the movable element is susceptible of kinematic connection to the arm so as to slow down the oscillation of the arm when the arm is in the first position but not when the arm is in the second position.

This configuration ensures that the damper only slows down the oscillation of the wheel from one side of the frame of the plough to the other side only during the inversion of the frame and not also during the transport of the plough, so that during the transport and especially in a bend the wheel is free to change direction without hindrances.

According to an optional feature of the invention, the mechanical element comprises first abutment means which are configured to abut second abutment means of the arm so as to kinematically connect the arm and the movable element when the arm is in the first position, while in the second position said first and second abutment means are not susceptible of mutual abutment.

It will therefore be appreciated that, advantageously, the arm is disconnected from the mechanical element when the combined wheel is in the second position.

In addition, it should be noted that, in a preferred example, the release of the wheel from the damper occurs automatically by effect of the rotation of the arm from the first to the second position.

In fact, advantageously, the rotation of the arm from the first to the second position moves the second abutment means away from the first abutment means so as to prevent the mutual abutment thereof, while the opposite rotation (i.e. from the second to the first position) brings the second abutment means closer to the first abutment means in order to allow the mutual abutment.

In some embodiments, the first abutment means comprise at least one tooth protruding from the mechanical element and configured to engage in abutment on the second abutment means. In a preferred example, the first abutment means comprise two teeth protruding symmetrically in a radial direction with respect to the oscillation axis from respective opposing sides of the mechanical element.

In some embodiments, the second abutment means comprise at least one abutment portion protruding from the arm in proximity to the oscillation axis, the at least one abutment portion being configured to engage in abutment on the first abutment means. In a preferred example, the second abutment means comprise two abutment portions protruding symmetrically from opposing sides of the arm.

On the basis of their constructive characteristics, the first and the second abutment means are therefore susceptible of mutual abutment so as to kinematically connect the arm and the damper when the arm is in the first but not in the second position.

The characteristics and advantages of the invention will become clearer from the detailed description of an embodiment illustrated, by way of non-limiting example, with reference to the appended drawings wherein:
- Figures 1 and 2 are side views of the plough as a whole, in operating and transport position, respectively;
- Figures 3 and 4 are side and top views respectively of a detail of Fig. 1;
- Figures 5 and 6 are side and rear views respectively of a detail of Fig. 2;
- Fig. 7 is an exploded perspective view of a detail of the plough;
- Fig. 8 is a side view of a detail of the plough in two different positions;
- Fig. 9 is a perspective view of a detail of the plough;
- Fig. 10 is a side view of a detail of the plough;
- Fig. 11 is a view of the detail of Fig. 10, in three different positions;
- Fig. 12 is a view of a detail of Fig. 11;
- Figures 13 and 14 are perspective views of a detail of the plough, in a first position;
- Figures 15 and 16 are perspective views of the detail of Figures 13 and 14, in a second position;
- Fig. 17 is a cross-sectional perspective view of a detail of Fig. 7;
- Fig. 18 is a perspective view of the articulation of the wheel arm in accordance with a second embodiment of the invention;
- Fig. 19 represents a detail of Fig. 18.

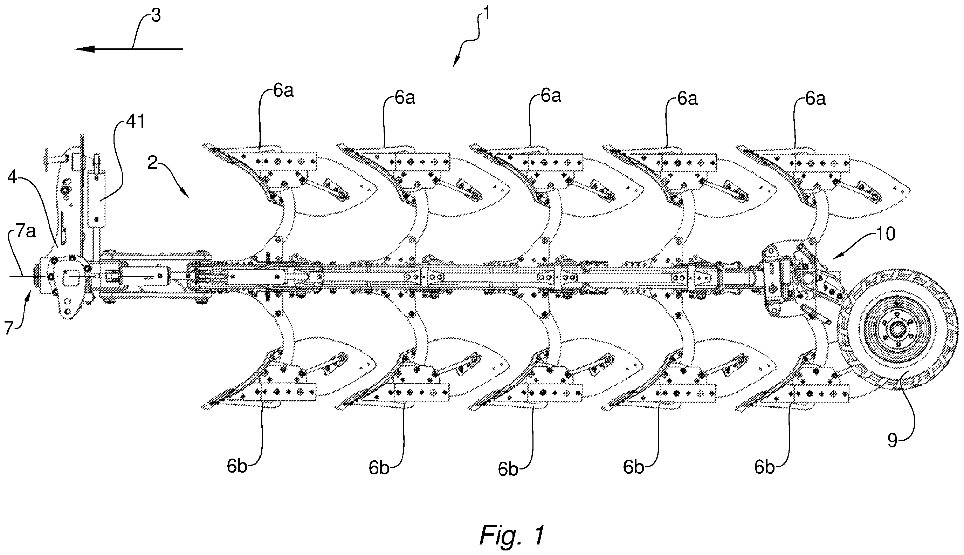

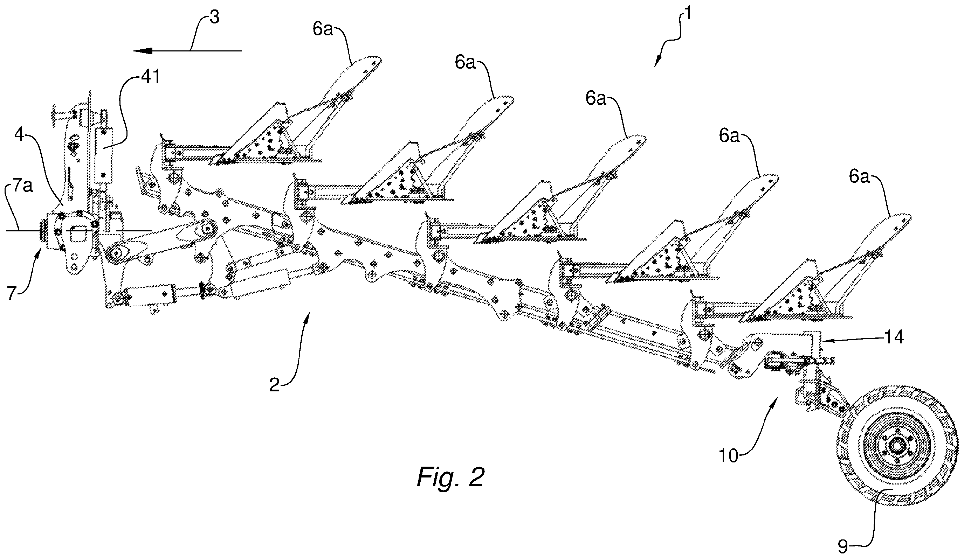

In the figures, 1 generally indicates a mounted reversible plough which, in operation, is normally towed in a direction of travel indicated by 3. The plough 1 comprises a frame 2 and an attachment member 4 for attaching the frame to a tractor (not shown). The frame 2 also carries first ploughing elements 6a and second ploughing elements 6b which are mutually opposing, shown in the example of Fig. 1 in an operating position of the second ploughing elements 6b and in the example of Fig. 2 in a transport position.

The frame 2 is rotatably secured to the attachment member 4 by means of an articulation 7 which is provided for an inversion of the frame 2 about an inversion axis 7a so as to rotate the frame 2 between two alternative operating positions. In the two alternative operating positions, the first and the second ploughing elements 6a and 6b are alternately operating on the ground.

Advantageously, the inversion axis 7a is directed in the travel direction 3. According to a further advantageous aspect, the two alternative operating positions of the frame 2 are mutually rotated by about 180° about the inversion axis 7a.

Preferably, a hydraulic drive 41 which is configured to invert the frame 2 is provided.

The plough 1 further comprises a wheel 9 for adjusting the working depth of the plough in the operating positions. A pivoting arm 11 supporting the wheel 9 is also provided. In a preferred example, the arm 11 is connected on the one hand to the wheel 9 by means of a rotatable constraint 12 which is configured to allow the wheel 9 to roll and on the other hand to a support 13 of the frame 2 by means of a second articulation 14 which is configured to allow an oscillation of the arm 11 about an oscillation axis 14a which is transverse to the inversion axis 7a. Preferably, when the plough is in the operating position with the ploughing elements operating on the ground, the oscillation axis 14a is horizontal and/or parallel to the ground.

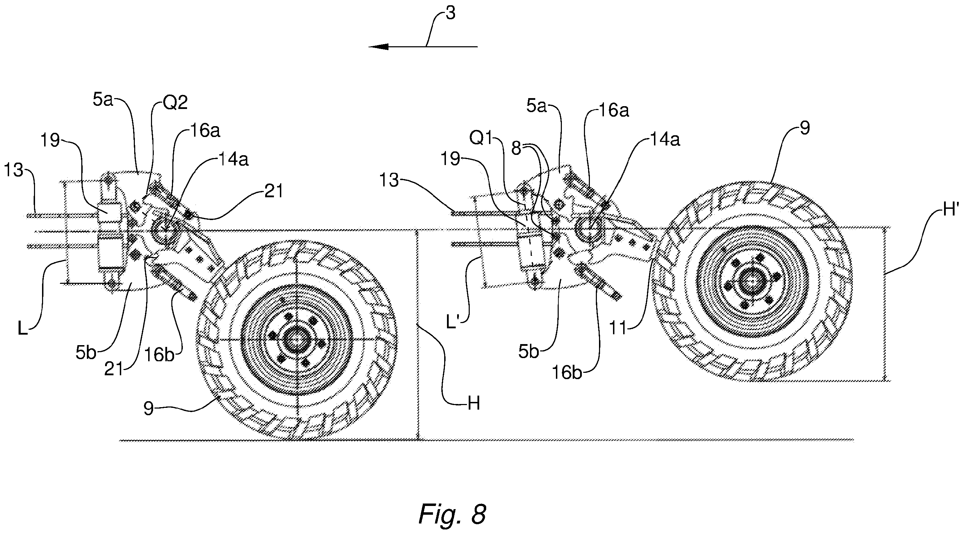

It will be appreciated that, when the plough is in the operating position, the oscillation of the arm 11 can be limited by a first stop device 16a on one side of the arm 11 and a second stop device 16b on the other side of the arm 11. Advantageously, the first stop device 16a and the second stop device 16b on the one hand are configured to abut the arm 11 and on the other hand they are configured to transmit the oscillation of the arm 11 respectively to a first oscillating element 5a hinged to the support 13 and to a second oscillating element 5b also hinged to the support 13. As shown in the example of Fig. 8, the first and the second ploughing element 5a and 5b are connected to each other by means of an adjustment member 19 configured to act counter the oscillation so as to symmetrically adjust the working depth of the first and second ploughing elements 6a and 6b that are opposing to each other. Advantageously, adjusting the working depth of the ploughing elements (6a or 6b) that are operating on the ground automatically and symmetrically leads to adjusting the working depth of the ploughing elements (6b or 6a respectively) that are at rest.

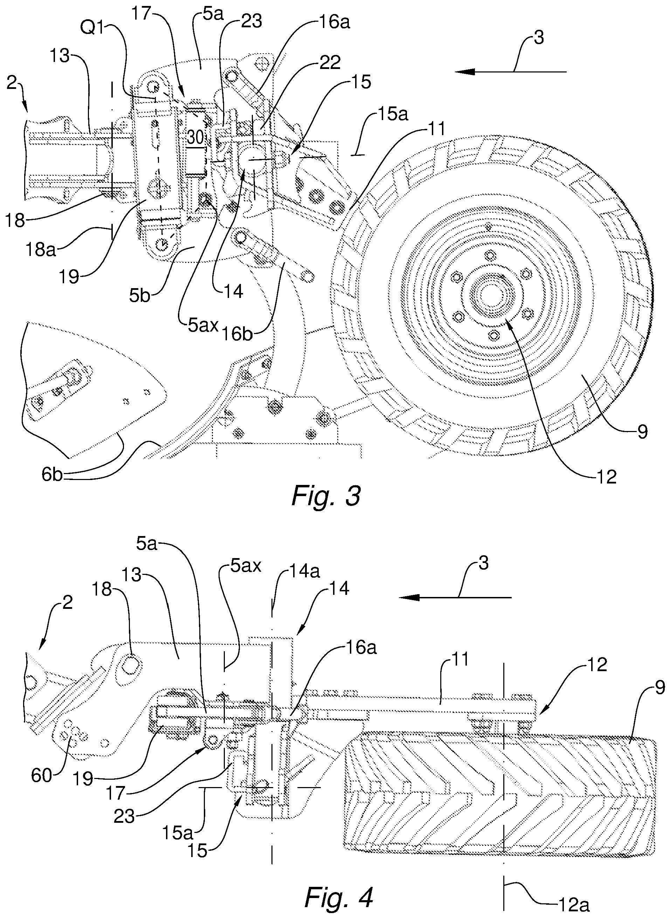

It will be appreciated that, advantageously, the first oscillating element 5a and the second oscillating element 5b form rocker arms of a first articulated quadrilateral Q1 having a side fixed in the support 13, as shown in the example of Fig. 3. In one aspect, the first oscillating element 5a and the second oscillating element 5b may perform an alternated rotational motion about respective rotary pairs connecting the oscillating elements 5a, 5b to the support 13. In this context, the adjustment member 19 forms the connecting rod of the first articulated quadrilateral Q1 and is configured to adjust the length of said connecting rod.

It should be noted that, in this context, "articulated quadrilateral" means a kinematic chain consisting of four rigid (or adjustable, as in the case of the adjustment member 19) members which are connected two by two, preferably by means of rotary pairs or articulation pins. Furthermore, it should be noted that, assuming that one of the members (the support 13) is fixed, "rocker arms" preferably refers to the two members that are adjacent to the fixed member, and "connecting rod" refers to the member which is opposite to the fixed member.

According to a further advantageous aspect, the first or second oscillating element 5a, 5b and the arm 11 when in abutment with the first or second stop device 16a, 16b form rockers of a second articulated quadrilateral Q2 having a side fixed in the support 13, as shown in the example of Fig. 8. In this context, said first or second stop device 16a, 16b forms a connecting rod of the second articulated quadrilateral Q2.

It will be appreciated that, preferably, the first articulated quadrilateral Q1 and the second articulated quadrilateral Q2 are kinematically connected to each other. Advantageously, the first articulated quadrilateral Q1 and the second articulated quadrilateral Q2 form a kinematic chain which is configured to transmit an adjustment movement of the adjustment member 19 to the arm 11 by interposition of the oscillating elements 5a, 5b and the stop devices 16a, 16b so as to symmetrically adjust the working depth of the opposing ploughing elements 6a, 6b.

Preferably, the first articulated quadrilateral Q1 and/or the second articulated quadrilateral Q2 are plane articulated quadrilaterals, i.e., they are articulated quadrilaterals having the axes of the rotary elements parallel to each other.

In the embodiment shown in the figures, the oscillating elements 5a and 5b comprise two perforated plates which are substantially identical to each other and which are symmetrically arranged with respect to the support 13. It will be appreciated that the first and second oscillating element 5a and 5b are hinged to the support 13 about respective hinge axes 5ax that are parallel to the oscillation axis 14a. Preferably, the first stop device 16a and the second stop device 16b are respectively secured to the first and the second oscillating element 5a and 5b in a rotatable manner about respective axes parallel to the oscillation axis 14a. In the embodiment shown, the first and the second stop device 16a and 16b are in the form of stop struts, i.e. stop elements which work under a prevalently compressive stress between the respective oscillating element 5a, 5b and the arm 11, such as specified in more detail below. The stop struts are two, identical to each other, and are axially extended so as to define an axial direction of the struts themselves.

In one aspect, when the plough is in the operating position, one of the oscillating elements (5a or 5b) faces upwards while the other oscillating element (5b or 5a, respectively) faces the ground.

It should be noted that, when the frame 2 rests on the ground by means of the wheel 9, preferably only one of the two stop devices (16a or 16b) is at work to oppose the oscillation of the arm 11. It should be noted that, in this context, the stop device (16a or 16b) lying closest to the ground is at rest while the stop device (16b or 16a respectively) furthest from the ground is at work, i.e. it abuts the arm 11. Advantageously, during the inversion of the frame 2, the stop devices 16a and 16b rotate about their rotatable constraint axes the respective oscillating elements 5a and 5b so as to move from the operating configuration on the arm 11 to the rest configuration or vice versa, by effect of the force of gravity. When a stop device 16a or 16b is at work to oppose the oscillation of the arm 11, it is engaged between the respective oscillating element 5a or 5b to which it is rotatably secured and the arm 11 by the upwardly facing arm, thus undergoing a mainly compressive stress. In one aspect, the first and the second stop device 16a and 16b have a first end which is rotatably secured to the first and the second oscillating element 5a and 5b, respectively and a second end which is opposite to the first end, said second end being configured to abut respective recesses 21 made in the arm 11, as shown in the example of Fig. 8.

In one aspect, the support 13 comprises at least one first abutment 8 which is configured to limit a rotation path of the first and the second oscillating element 5a and 5b about the respective hinge axes 5ax. When the plough is in the operating position with a stop device 16a (or 16b) abutting the arm 11, this stop device forces the oscillating element 5a (or 5b) to which it is associated to rotate about the respective hinge axis 5ax. Since the oscillating element 5a (or 5b) is associated to the adjustment device 19, the rotation of this oscillating element 5a (or 5b) forces the compression of the adjustment member 19 which in turn forces the rotation of the other oscillating element 5b (or 5a) to which it is associated up to the point where the latter oscillating element 5b (or 5a) abuts against the first abutment 8 made in the support 13 in order to limit the rotation path of the oscillating element 5b (or 5a) as shown in Fig. 8. In this way, the extension of the adjustment element 19 causes the rotation of an oscillating element with respect to the other oscillating element.

In one aspect, the oscillating elements 5a and 5b function as mechanical rockers, that is as oscillating arms pivoted to the support 13 to realise a mechanical lever of the first class. In fact, when the wheel 9 rests on the ground, the oscillating element 5b (or 5a) which - depending on the operating position of the frame 2 about the inversion axis 7a - is not kinematically connected to the arm 11, is pushed by the adjustment member 19 towards the first stop 8. On the other hand, the oscillating element 5a (or 5b) which - depending on the operating position of the frame 2 about the inversion axis 7a - is kinematically connected to the arm 11, realises a first-class lever pivoting about its own hinge axis 5ax. In practice, the fulcrum is interposed between the two forces that are applied respectively by the oscillation of the arm 11 on the one hand and by the adjustment member 19 on the other hand. Thus, on the one hand, the lever is stressed by the stop device 16a (or 16b), which abuts the arm 11, and on the other hand, the lever in turn stresses the adjustment member 19. In this way, the oscillating element 5a (or 5b) which is kinematically connected to the arm 11 may rotate by effect of a change in extension of the adjustment member 19 while the oscillating element 5b (or 5a) which is not kinematically connected to the arm 11 maintains its position being abutted by the first stop 8. When the wheel 9 moves from one operating position to another, the working depth adjustment remains unchanged.

As shown in the example of Fig. 8, the adjustment member 19 has a variable extension L, L' which allows controlling the rotation of the oscillating element 5a (or 5b) which - depending on the operating position of the frame 2 about the inversion axis 7a - is kinematically connected to the arm 11. The rotation of this oscillating element 5a (or 5b) in turn adjusts the position of the arm 11 and thus the distance H, H' of the wheel 9 from the frame 2 so as to adjust the working depth of the ploughing elements 6a and 6b.

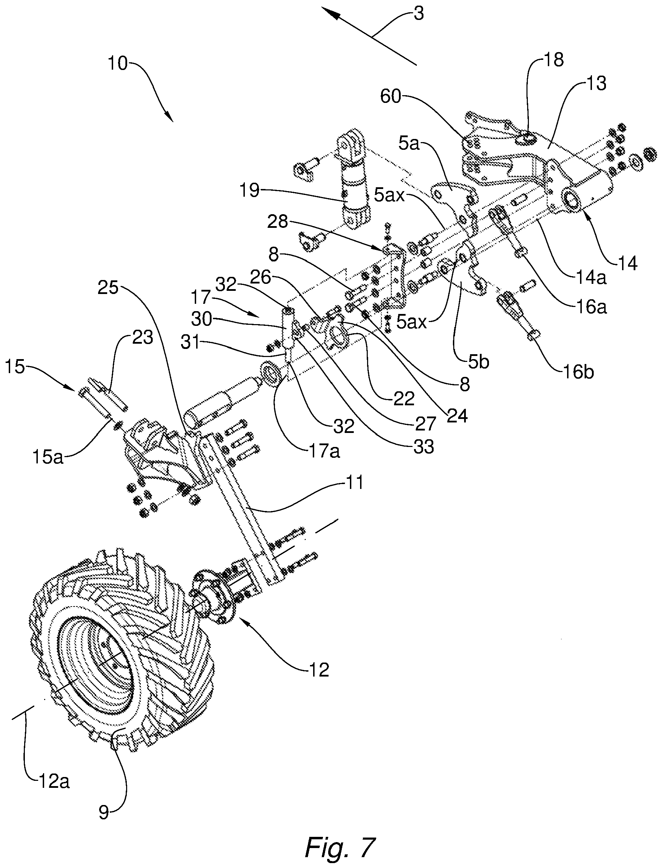

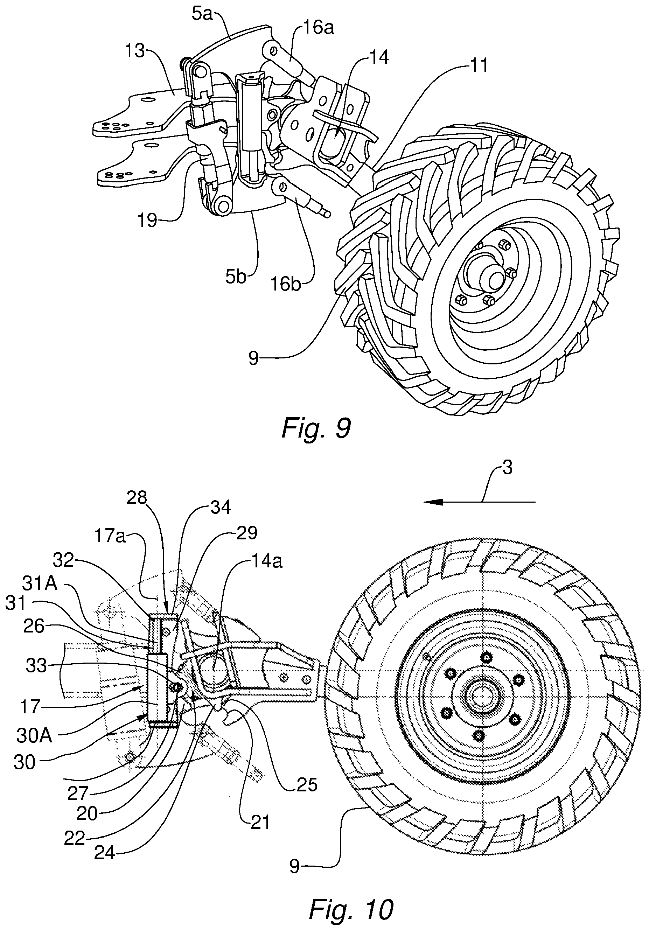

The adjusting member 19 may comprise at least one adjustment device chosen from a hydraulic cylinder as shown, for example, in Fig. 7, a mechanical tie rod as shown, for example, in Fig. 9, an electromechanical device (not shown) or an element (for example a rod or a plate) provided with a plurality of holes (not shown). It will be appreciated that said holes preferably have a fixed position.

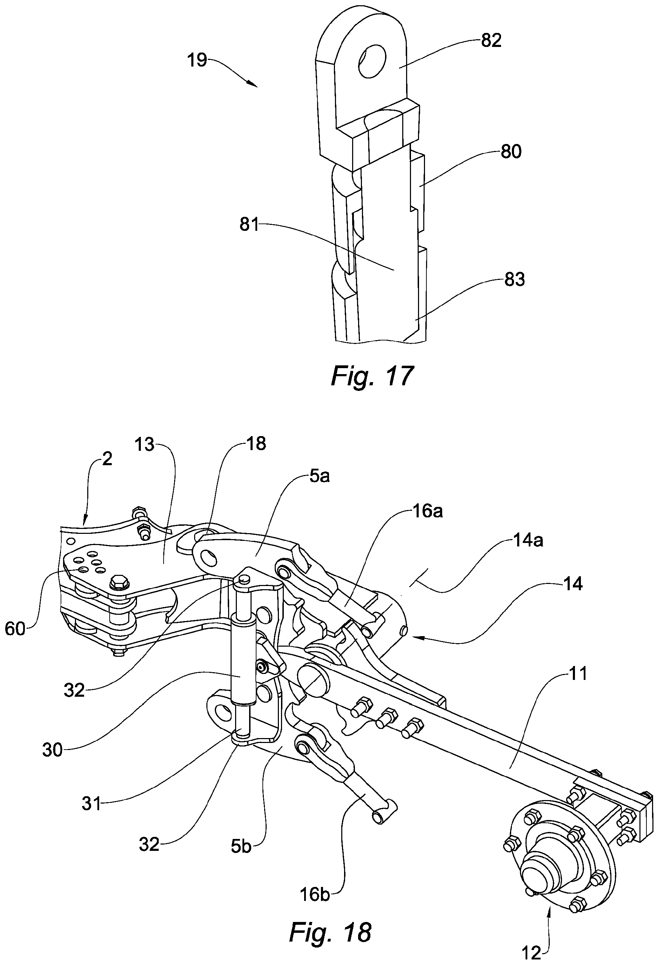

As shown in the example of Fig. 17, the adjustment member 19 may comprise an adjustable end stop 80 which is configured to adjust the minimum length of the adjustment member itself. It will be appreciated that the end stop 80 may comprise, for example, a threaded bushing whose position may be adjusted by screwing/unscrewing with respect to the main body 81 of the adjustment member 19. At work, the main body 81 is secured to the first and the second oscillating element 5a and 5b at their annular ends 82. When the movable body 83 of the adjusting member is moved with respect to the main body 81 in order to raise the frame of the plough with respect to the ground, the end stop 80 maintains its position. In this way, it is possible to raise the frame with respect to the ground by extending the adjustment member 19 without losing the reference position set by means of the adjustable end stop 80.

In some embodiments not shown, the end stop 80 comprises a plurality of shims having different heights.

During the inversion of the frame 2, the oscillation of the wheel 9 between the two alternative operating positions can be slowed down by means of a damper 17.

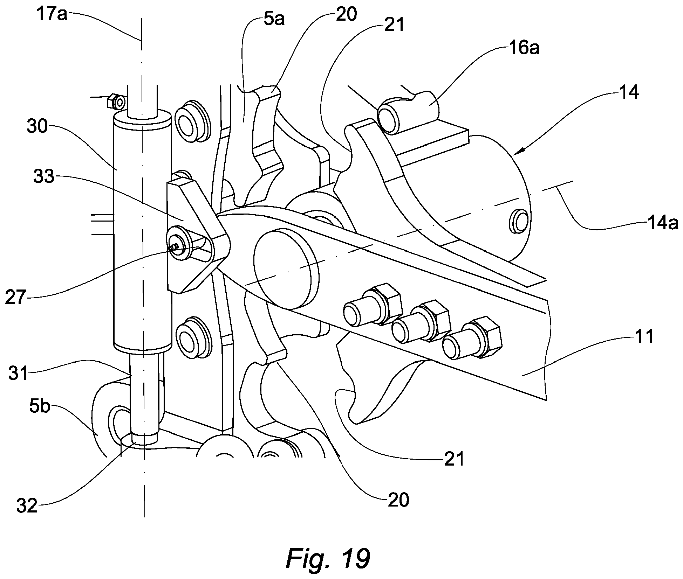

As highlighted in the examples of figures 18 and 19, the damper 17 advantageously comprises a movable element 30 which is kinematically connected to the arm 11 during the inversion of the frame 2. The movable element 30 is configured to slide along a support 31 which is longitudinally extended so as to slow down the oscillation of the arm 11 during the inversion.

In one aspect, the support 31 develops along a sliding axis 17a between two opposing ends 32 of the support 31. More precisely, these ends are opposing along the sliding axis 17a of the movable element 30 along the support 31. In some embodiments, the ends 32 of the support 31 are secured to the support 13, preferably in a rigid manner.

Referring to the example in Fig. 10, a bracket 28 is provided for fixing the support 31 to the support 13.

Preferably, the bracket 28 comprises a longitudinal portion 29 which is secured to the support 13. It is preferred that the longitudinal portion 29 lies in a plane which is substantially perpendicular or anyway transverse to the oscillation axis 14a. It is further preferred that the longitudinal portion 29 is perforated so as to allow a bolted connection with the support 13.

Also preferentially, two end portions 34 of the bracket 28 are defined.

Preferably, the end portions 34 protrude from the respective opposing ends of the longitudinal portion 29 and, even more preferably, extend away from the support 13. In some embodiments, the end portions 34 are substantially perpendicular or anyway transverse to the longitudinal portion 29.

In a preferred example, the opposing ends 32 of the support 31 are secured to respective end portions 34 of the bracket, preferably in a rigid manner, for example by means of a bolted connection.

According to one embodiment, the end portions 34 lie on respective planes which are substantially perpendicular or otherwise transverse to the sliding axis 17a of the support and, advantageously, extend away from the support 13 passing past the support 31 so as to protect the support 31 from any accidental impacts of foreign bodies.

Preferably, the support 31 is a rod 31A and the movable element 30 is a sleeve 30A of said rod 31.

Even more preferably, the sleeve 30A is configured to slide along the rod 31A in the presence of a viscous fluid. Advantageously, the actuation of the damper 17 moves the viscous oil from one side to the other side of the damper through a calibrated passage (not shown) which allows the oil to seep between two chambers (not shown), with consequent damping of the sliding speed of the sleeve 30A along the rod 31A.

In a more preferred example, the damper 17 is of the type with a rod 31A passing through both opposing ends of the sleeve 30A.

In some embodiments, the movable element 30 is kinematically connected to the arm 11 through a manoeuvring pin 27 which is secured to the arm 11 and, preferably, configured to abut a slot 33 associated with the movable element 30, as shown in the example of Fig. 19. Advantageously, the manoeuvring pin 27 is secured to the arm 11 on the opposite side with respect to the wheel 9. According to a further advantageous aspect, the support 31 is adjacent to the pin of the second articulation 14, on the part of the arm 11 opposite to the wheel 9.

In preferred embodiments, the movable element 30 is configured to slide with respect to the support 31 along a sliding axis 17a which is transverse to the inversion axis 7a and/or the oscillation axis 14a. Preferably, the sliding axis 17a is perpendicular to the inversion axis 7a and/or to the oscillation axis 14a.

It will be appreciated that, in one aspect, the arm 11 during the inversion of the frame 2 forms a lever which is pivoted about the oscillation axis 14a, the wheel 9 and the damper 17 being configured to apply to the lever a motive force-weight and a resistant force counter to the motive force-weight, respectively.

As shown in the example of Fig. 18, the lever formed by the arm 11 during the inversion of the frame 2 may be a first-class lever in which the motive force-weight and the resistant force are applied to the arm 11 in diametrically opposite positions with respect to said oscillation axis 14a.

According to a further advantageous aspect, the lever formed by the arm 11 during the inversion of the frame 2 may be a second-class lever, in which the motive force-weight and the resistant force are applied to the arm 11 from the same side with respect to the oscillation axis 14a.

As shown in the example of Fig. 10, in some embodiments the movable element 30 is kinematically connected to the arm 11 during the inversion of the frame 2 by means of a mechanical element 22 which, preferably, is rotatably secured about the oscillation axis 14a. As shown in the example of Fig. 7, the mechanical element 22 may be in the form of a plate with a central hole which, preferably, is configured to receive a pin of the second articulation 14. In this context, the mechanical element 22 is driven in rotation about the oscillation axis 14a by the arm 11 during the inversion of the frame 2. It will be appreciated that, advantageously, the damper 17 is configured so as to act counter the rotation of the mechanical element 22 about the oscillation axis 14a so as to slow down the oscillation of the arm 11 during the inversion.

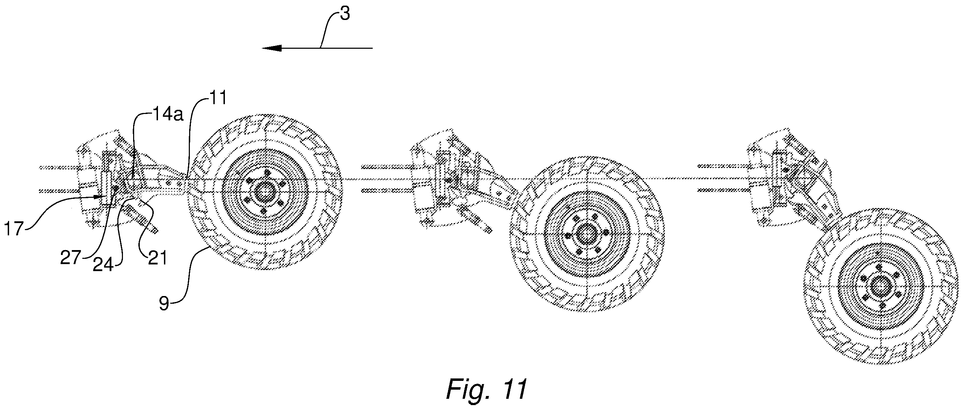

The operation of the damper 17 under these conditions is illustrated by way of example in the sequence in Fig. 11. It will be appreciated that the movable element 30 is kinematically connected to the mechanical element 22. In one aspect, the mechanical element 22 comprises a portion 26 which, preferably, is extended radially with respect to the oscillation axis 14a, said portion 26 including a manoeuvring pin 27 which is adapted to engage in the slot 33 made in the movable element 30. Advantageously, the coupling of the manoeuvring pin 27 with the slot 33 makes it possible to convert a rotation of the mechanical element 22 into a translation of the movable element 30 along the support 31.

In one aspect, the mechanical element 22 comprises at least one and preferably two teeth 24 which, in one example, are radially extended with respect to said oscillation axis 14a and, again in one example, are opposing to each other, preferably with an arrangement and/or conformation that is symmetrical with respect to the oscillation axis. Advantageously, the teeth 24 are configured to engage in abutment on the arm 11, preferably so as to realise a rotation coupling between said mechanical element 22 and said arm 11 about the oscillation axis 14a that is so as to make said mechanical element 22 and arm 11 integral in rotation about the oscillation axis 14a.

Referring to the example of Fig. 10, the arm 11 comprises at least one and preferably two abutment portions 25 which are configured to abut the teeth 24 so that, when one of the abutment portions 25 abuts one of the teeth 24, the arm 11 drives the mechanical element 22 in rotation about the oscillation axis 14a.

In some embodiments, the abutment portions 25 lie in a plane which is substantially perpendicular or otherwise transverse to the axis of the wheel 9 and, in a preferred example, protrude from respective opposing sides of the arm 11 with an arrangement and/or conformation that is preferably symmetrical with respect to the arm 11.

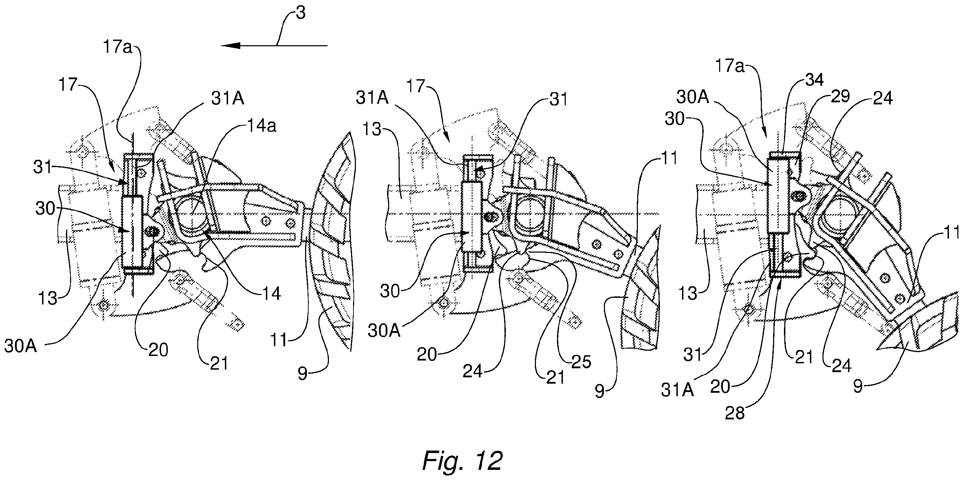

According to a further advantageous aspect, the oscillating elements 5a and 5b comprise a second abutment 20 which is configured to limit an oscillation path of the arm 11 about the oscillation axis 14a, as shown in the example of Fig. 12. Advantageously, the second abutment 20 is configured to engage in and disengage from respective recesses 21 of the arm 11.

In one aspect, the second abutment 20 is configured to limit a rotation path of the mechanical element 22 about the oscillation axis 14a. Preferably, the teeth 24 of the mechanical element 22 are adapted to engage on said second abutment 20 in order to limit the rotation path of the mechanical element 22.

It will be appreciated that the mechanical element 22 is particularly advantageous where the wheel 9 is a combined wheel, as explained in more detail below.

Indeed, it should be noted that in some embodiments the frame 2 is rotatably secured to the attachment member 4 so as to rotate between the two alternative operating positions and further a transport position which, preferably, is intermediate between the two alternative operating positions. According to an optional feature of the invention, the transport position is located at an intermediate position between the two alternative operating positions, i.e. it is located substantially at 90° of rotation about the inversion axis 7a with respect to each of the two alternative operating positions. By way of illustration, it will be appreciated that the frame 2 is shown in Fig. 1 in an operating position and in Fig. 2 in a transport position rotated by about 90° about the inversion axis 7a with respect to the operating position of Fig. 1. In this context, the wheel 9 is preferably a wheel of the combined type.

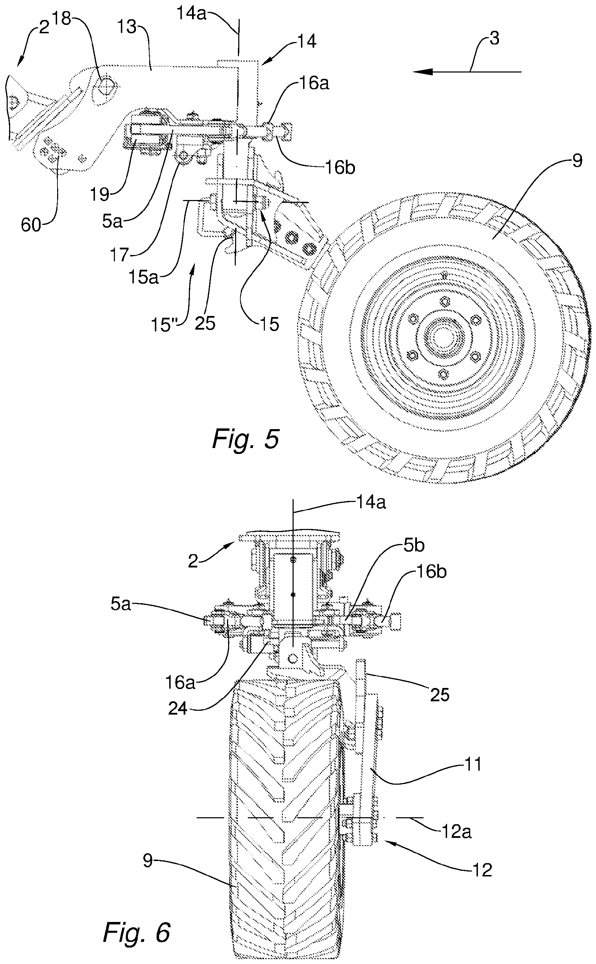

According to one embodiment, during the transport phase, the oscillation axis 14a is substantially vertical and/or perpendicular to the ground. In this context, preferably, the arm 11 is configured to rotate about a repositioning axis 15a of a third articulation 15 which is perpendicular or anyway transverse to the oscillation axis 14a of the second articulation 14 in order to move the combined wheel 9 between a first position 15' in which the combined wheel 9 is configured to adjust the working depth of the ploughing elements 6a or 6b as shown in the examples of Figures 3 and 4, and a second position 15" in which the combined wheel 9 is configured to support the frame 2 in a transport position as shown in the examples of Figures 5 and 6.

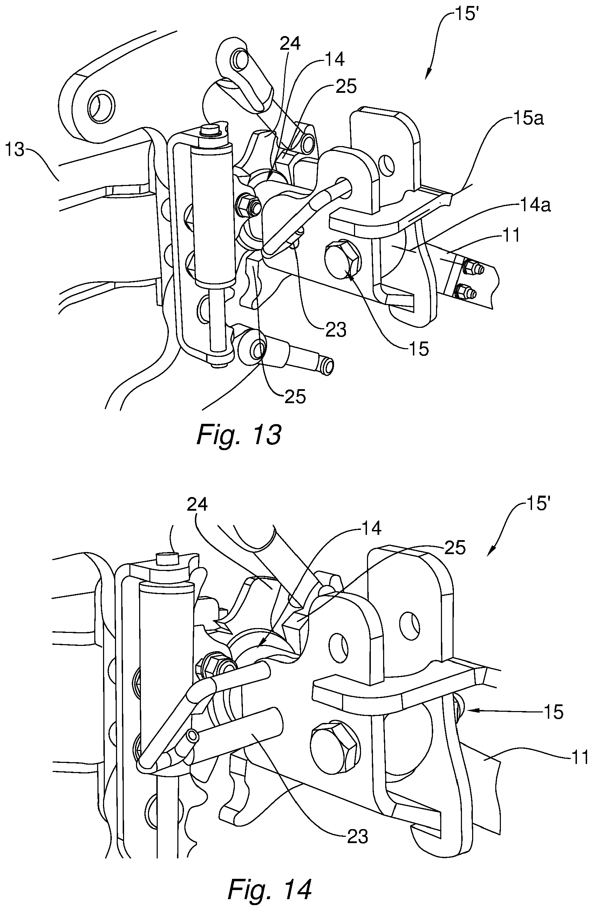

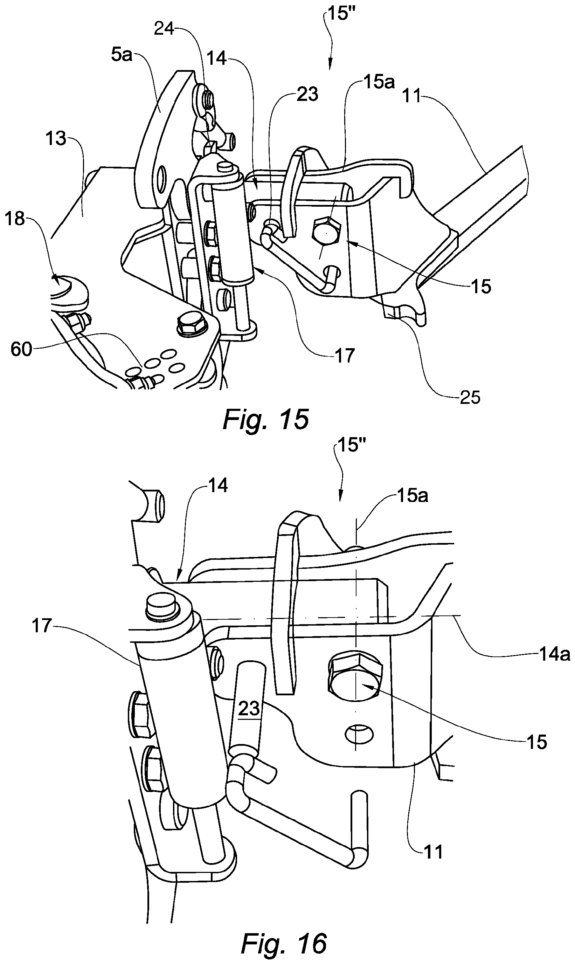

Advantageously, there is provided a safety pin 23 which is configured to block the rotation of the arm 11 about the repositioning axis 15a in the first position 15' of the combined wheel 9 as shown in the examples of Figures 13 and 14 or in the second position 15" of the combined wheel 9 as shown in the examples of Figures 15 and 16.

According to an optional feature of the invention, the abutment portions 25 of the arm rotate together with the arm 11 about the repositioning axis 15a in moving the wheel 9 from the first position 15' to the second position 15".

When the wheel 9 and the arm 11 are in the first position 15', the abutment portions 25 preferably lie in a plane which is substantially perpendicular or anyway transverse to the oscillation axis 14a. When the wheel 9 and the arm 11 are instead in the second position 15", the abutment portions 25 preferably lie in a plane which is substantially parallel to the oscillation axis 14a.

On the other hand, preferably, the mechanical element 22 is not susceptible of rotating together with the arm 11 around the repositioning axis 15a in the movement of the wheel 9 from the first position 15' to the second position 15" or vice versa.

It follows that, advantageously, when the arm 11 rotates from the first position 15' to the second position 15", the abutment portions 25 move away from the teeth 24. Such distancing means that, in the second position 15", the abutment portions 25 are no longer susceptible of abutment by the teeth 24, preferably at least until the arm 11 is returned to the first position 15'.

Therefore, according to a further advantageous aspect, the arm 11 is disconnected from the mechanical element 22 when the combined wheel 9 is in the second position 15". In this way the combined wheel 9 is free to oscillate about the oscillation axis 14a without hindrances, thus allowing a change in the rolling direction of the wheel according to the path taken during transport.

In a more preferred example, the mutual abutment configuration between arm 11 and mechanical element 22 is automatically restored by effect of the approach again between the abutment portions 25 and the teeth 24 when the arm 11 is rotated from the second position 15" to the first position 15'.

In some embodiments, the support 13 is connected to the frame 2 by means of a fourth articulation 18 having a fourth axis 18a which is perpendicular to the inversion axis 7a and to the oscillation axis 14a. Advantageously, the fourth articulation 18 allows an inclination of the oscillation axis 14a with respect to the inversion axis 7a about the fourth axis 18a to be adjusted. Preferably, as shown in the example of Fig. 4, a perforated plate 60 which is adapted to fix the fourth articulation 18 in an adjustable position is provided.

The invention thus solves the problem posed by achieving numerous advantages including:
- increasing the reliability of the system that dampens the oscillation of the wheel during the inversion of the frame,
- increasing the safety during the transport of the plough,
- easing the adjustment of the working depth by allowing, with a single adjustment, the symmetrical adjustment of the opposing ploughing elements;
- adjusting the wheel by means of a single adjustment member, possibly by means of a single hydraulic hose from the tractor to the combined wheel;
- raising the frame without losing the previously set working depth adjustment;
- slowing down the descent of the wheel from one operating position to another when inverting the frame;
- easing the movement of the combined wheel to and from the transport position.

## Claims

1. A mounted reversible plough (1) comprising a frame (2) and an attachment member (4) for attaching said frame (2) to a tractor, said frame (2) carrying at least a first ploughing element (6a) and at least a second ploughing element (6b) which are mutually opposing and the frame (2) being rotatably secured to said attachment member (4) about an inversion axis (7a) in order to invert said frame (2), said plough (1) further comprising a wheel (9) which is configured for adjusting a working depth of the plough in two opposing operating positions of the wheel (9), in which said first ploughing element (6a) and second ploughing element (6b) are operative, respectively, an arm (11) which, on the one hand, supports said wheel (9) and, on the other hand, is rotatably connected to a support (13) of said frame (2) about an oscillation axis (14a) which is transverse with respect to said inversion axis (7a) so as to allow an oscillation of said arm (11) between the first and the second operating position of the wheel (9), the oscillation of the arm (11) during the inversion of the frame (2) being slowed down by means of a damper (17), **characterized in that** said damper (17) comprises a movable element (30) which is kinematically connected to said arm (11) during the inversion of the frame (2), said movable element (30) being configured to slide along a support (31) of the movable element (30) which support (31) extends longitudinally and the ends (32) of which are rigidly secured to said support (13) of said frame (2) so as to slow down the oscillation of the arm (11) during said inversion.

2. A plough (1) according to claim 1, wherein said support (31) is a rod (31A) and said movable element (30) is a sleeve (30A) of said rod (31).

3. A plough (1) according to claim 2, wherein said sleeve (30A) is longitudinally extended between two opposing ends, said rod (31A) passing through both opposing ends of said sleeve.

4. A plough (1) according to any one of the preceding claims, wherein said ends (32) of said support (31) are opposing to each other along a sliding axis (17a) of said movable element (30) along said support (31).

5. A plough (1) according to any one of the preceding claims, wherein the arm (11) is configured to rotate about a repositioning axis (15a) which is transverse to the oscillation axis (14a) in order to move the wheel (9) between a first position (15') in which the wheel (9) is configured to adjust the working depth of the ploughing elements (6a, 6b) and a second position (15") in which the wheel (9) is configured to support the frame (2) in a transport position, the movable element (30) being susceptible of kinematic connection to the arm (11) so as to slow down the oscillation of the arm (11) when the arm is in the first position (15') but not when the arm is in the second position (15").

6. A plough (1) according to any one of the preceding claims, wherein said movable element (30) is kinematically connected to said arm (11) during the inversion of the frame (2) through a mechanical element (22) which is rotatably secured about said oscillation axis (14a), said mechanical element (22) being driven in rotation about said oscillation axis (14a) by said arm (11) during the inversion of said frame (2), said damper (17) being configured so as to act counter the rotation of said mechanical element (22) about said oscillation axis (14a) so as to slow down the oscillation of said arm (11) during said inversion.

7. A plough (1) according to claim 6 when dependent on claim 5, wherein the mechanical element (22) comprises first abutment means (24) which are configured to abut second abutment means (25) of the arm (11) so as to kinematically connect the arm (11) and the movable element (30) when the arm is in the first position (15'), while in the second position (15") said first and second abutment means (24, 25) are not susceptible of mutual abutment.

8. A plough (1) according to claim 7, wherein the rotation of the arm (11) from the first position (15') to the second position (15") moves the second abutment means (25) away from the first abutment means (24) so as to prevent their mutual abutment, while the opposite rotation brings the second abutment means (25) closer to the first abutment means (24) so as to allow their mutual abutment.

9. A plough (1) according to claim 7 or 8, wherein the first abutment means (24) comprise at least one tooth protruding from the mechanical element (22) and configured to engage in abutment on the second abutment means (25).

10. A plough (1) according to any one of claims 7 to 9, wherein the second abutment means (25) comprise at least one abutment portion protruding from the arm (11) in proximity to the oscillation axis (14a), the at least one abutment portion being configured to engage in abutment on the first abutment means (24).

11. A plough (1) according to any one of the preceding claims, wherein said sliding axis (17a) is transverse to said inversion (7a) and/or oscillation (14a) axis, preferably said sliding axis (17a) being perpendicular to said inversion (7a) and/or oscillation (14a) axis.

12. A plough (1) according to any one of the preceding claims, wherein said arm (11) during the inversion of the frame (2) forms a lever which is pivoted about said oscillation axis (14a), said wheel (9) and said damper (17) being configured to apply to said lever, respectively, a motive weight force and a resistant force counter to said motive weight force.

13. A plough (1) according to any one of the preceding claims, further comprising a first stop device (16a) and a second stop device (16b) which are configured so as to limit the oscillation of the arm (11) in said first and said second operating positions, respectively, so as to define a corresponding working depth of the plough in said operating positions, said first and second stop devices (16a, 16b) being connected to a first oscillating element (5a) and a second oscillating element (5b), respectively, said first and second oscillating elements (5a, 5b) being hinged to said support (13) and being kinematically connected to each other in an adjustable manner through an adjustment member (19) which is configured to transmit a movement of one of the oscillating elements (5a, 5b) to the other oscillating element (5b, 5a) so as to symmetrically adjust the working depth of the opposing ploughing elements (6a, 6b).

14. A plough (1) according to any one of the preceding claims, wherein the movable element (30) is kinematically connected to the arm (11) through a manoeuvring pin (27) which is secured to the arm (11), preferably wherein the manoeuvring pin (27) is configured to abut a slot (33) associated with the movable element (30).

15. A plough (1) according to claim 14, wherein the manoeuvring pin (27) is secured to the arm (11) on the opposite side with respect to the wheel (9), and/or wherein the arm (11) is connected to the support (13) of the frame (2) by a second articulation (14) which is configured to allow the oscillation of the arm (11) about the oscillation axis (14a), the support (31) of the damper (17) being adjacent to a pin of the second articulation (14), on the part of the arm (11) opposite to the wheel (9).

## Patentansprüche

1. Anbau-Wendepflug (1) mit einem Rahmen (2) und einem Befestigungselement (4) zum Befestigen des Rahmens (2) an einem Traktor, wobei der Rahmen (2) zumindest ein erstes Pflugelement (6a) und zumindest ein zweites Pflugelement (6b) trägt, die einander gegenüberliegen, und der Rahmen (2) drehbar am Befestigungselement (4) um eine Umkehrachse (7a) befestigt ist, um den Rahmen (2) umzukehren, wobei der Pflug (1) ferner ein Rad (9) aufweist, das zum Einstellen einer Arbeitstiefe des Pfluges in zwei entgegengesetzte Betätigungspositionen des Rades (9) eingerichtet ist, in denen das erste Pflugelement (6a) und zweite Pflugelement (6b) jeweils wirksam sind, und einen Arm (11) aufweist, der einerseits das Rad (9) trägt und andererseits drehbar mit einem Träger (13) des Rahmens (2) um eine Schwingachse (14a) verbunden ist, die quer in Bezug auf die Umkehrachse (7a) verläuft, um eine Schwingung des Arms (11) zwischen der ersten und zweiten Betätigungsposition des Rades (9) zu ermöglichen, wobei die Schwingung des Arms (11) während der Umkehr des Rahmens (2) durch einen Dämpfer (17) verlangsamt wird, **dadurch gekennzeichnet, dass** der Dämpfer (17) ein bewegliches Element (30) aufweist, das kinematisch mit dem Arm (11) während der Umkehr des Rahmens (2) verbunden ist, wobei das bewegliche Element (30) eingerichtet ist, um entlang eines Trägers (31) des beweglichen Elements (30) zu gleiten, dessen Träger (31) sich in Längsrichtung erstreckt und seine Enden (32) starr am Träger (13) des Rahmens (2) befestigt sind, um die Schwingung des Arms (11) während der Umkehr zu verlangsamen.

2. Pflug (1) nach Anspruch 1, wobei der Träger (31) eine Stange (31A) und das bewegliche Element (30) eine Hülse (30A) der Stange (31) ist.

3. Pflug (1) nach Anspruch 2, wobei sich die Hülse (30A) in Längsrichtung zwischen zwei gegenüberliegenden Enden erstreckt und die Stange (31A) durch beide gegenüberliegenden Enden der Hülse verläuft.

4. Pflug (1) nach einem der vorhergehenden Ansprüche, wobei die Enden (32) des Trägers (31) einander entlang einer Gleitachse (17a) des beweglichen Elements (30) entlang des Trägers (31) gegenüberliegen.

5. Pflug (1) nach einem der vorhergehenden Ansprüche, wobei der Arm (11) eingerichtet ist, um sich um eine quer zur Schwingachse (14a) liegende Neupositionierungsachse (15a) zu drehen, um das Rad (9) zwischen einer ersten Position (15'), in der das Rad (9) eingerichtet ist, um die Arbeitstiefe der Pflugelemente (6a, 6b) einzustellen, und einer zweiten Position (15") zu bewegen, in der das Rad (9) eingerichtet ist, um den Rahmen (2) in einer Transportposition abzustützen, wobei das bewegliche Element (30) kinematisch mit dem Arm (11) verbunden werden kann, um die Schwingung des Arms (11) zu verlangsamen, wenn sich der Arm in der ersten Position (15') befindet, nicht jedoch, wenn sich der Arm in der zweiten Position (15") befindet.

6. Pflug (1) nach einem der vorhergehenden Ansprüche, wobei das bewegliche Element (30) kinematisch mit dem Arm (11) während der Umkehr des Rahmens (2) durch ein mechanisches Element (22) verbunden ist, das um die Schwingachse (14a) drehbar befestigt ist, wobei das mechanische Element (22) durch den Arm (11) beim Drehen um die Schwingachse (14a) während der Umkehr des Rahmens (2) angetrieben wird, wobei der Dämpfer (17) eingerichtet ist, um der Drehung des mechanischen Elements (22) um die Schwingachse (14a) entgegenzuwirken, um die Schwingung des Arms (11) während der Umkehr zu verlangsamen.

7. Pflug (1) nach Anspruch 6 in Abhängigkeit von Anspruch 5, wobei das mechanische Element (22) erste Anlagemittel (24) aufweist, die eingerichtet sind, um an zweiten Anlagemitteln (25) des Arms (11) anzuliegen, um den Arm (11) und das bewegliche Element (30) kinematisch zu verbinden, wenn sich der Arm in der ersten Position (15') befindet, während in der zweiten Position (15") die ersten und zweiten Anlagemittel (24, 25) nicht für eine gegenseitige Anlage geeignet sind.

8. Pflug (1) nach Anspruch 7, wobei die Drehung des Arms (11) von der ersten Position (15') in die zweite Position (15") die zweiten Anlagemittel (25) von den ersten Anlagemitteln (24) wegbewegt, um so deren gegenseitige Anlage zu verhindern, während die entgegengesetzte Drehung die zweiten Anlagemittel (25) näher an die ersten Anlagemittel (24) bringt, um so deren gegenseitige Anlage zu ermöglichen.

9. Pflug (1) nach Anspruch 7 oder 8, wobei die ersten Anlagemittel (24) zumindest einen Zahn aufweisen, der aus dem mechanischen Element (22) hervorsteht und eingerichtet ist, um an den zweiten Anlagemitteln (25) anzuliegen.

10. Pflug (1) nach einem der Ansprüche 7 bis 9, wobei die zweiten Anlagemittel (25) zumindest einen Anlageabschnitt aufweisen, der vom Arm (11) in der Nähe der Schwingachse (14a) hervorsteht, wobei zumindest ein Anlageabschnitt eingerichtet ist, um an den ersten Anlagemitteln (24) anzuliegen.

11. Pflug (1) nach einem der vorhergehenden Ansprüche, wobei die Gleitachse (17a) quer zur Umkehrachse (7a) und/oder Schwingachse (14a) verläuft, wobei die Gleitachse (17a) vorzugsweise senkrecht zur Umkehrachse (7a) und/oder Schwingachse (14a) verläuft.

12. Pflug (1) nach einem der vorhergehenden Ansprüche, wobei der Arm (11) bei der Umkehr des Rahmens (2) einen Hebel bildet, der um die Schwingachse (14a) schwenkbar ist, wobei das Rad (9) und der Dämpfer (17) eingerichtet ist, um auf den Hebel jeweils eine Antriebsgewichtskraft und eine der Antriebsgewichtskraft entgegengesetzte Widerstandskraft aufzubringen.

13. Pflug (1) nach einem der vorhergehenden Ansprüche, der ferner eine erste Anschlagvorrichtung (16a) und eine zweite Anschlagvorrichtung (16b) aufweist, die eingerichtet sind, um die Schwingung des Arms (11) in der ersten bzw. zweiten Betätigungsposition zu begrenzen, um eine entsprechende Arbeitstiefe des Pfluges in den Betätigungspositionen zu bilden, wobei die ersten und zweiten Anschlagvorrichtungen (16a, 16b) mit einem ersten Schwingelement (5a) bzw. einem zweiten Schwingelement (5b) verbunden sind, wobei die ersten und zweiten Schwingelemente (5a, 5b) am Träger (13) angelenkt und kinematisch durch ein Einstellelement (19) miteinander einstellbar verbunden sind, das eingerichtet ist, um eine Bewegung eines der Schwingelemente (5a, 5b) auf das andere Schwingelement (5b, 5a) zu übertragen, um so die Arbeitstiefe der gegenüberliegenden Pflugelemente (6a, 6b) symmetrisch einzustellen.

14. Pflug (1) nach einem der vorhergehenden Ansprüche, wobei das bewegliche Element (30) kinematisch mit dem Arm (11) über einen Manövrierstift (27), der am Arm (11) befestigt ist, verbunden ist, wobei der Manövrierstift (27) vorzugsweise eingerichtet ist, um an einem Schlitz (33) anzuliegen, der dem beweglichen Element (30) zugeordnet ist.

15. Pflug (1) nach Anspruch 14, wobei der Manövrierstift (27) am Arm (11) auf der dem Rad (9) gegenüberliegenden Seite befestigt ist und/oder wobei der Arm (11) mit dem Träger (13) des Rahmens (2) über ein zweites Gelenk (14) verbunden ist, das eingerichtet ist, um die Schwingung des Arms (11) um die Schwingachse (14a) zu ermöglichen, wobei der Träger (31) des Dämpfers (17) an einen Stift des zweiten Gelenks (14) an dem Teil des Arms (11), der dem Rad (9) gegenüberliegt, angrenzt.

## Revendications

1. Charrue réversible montée (1) comprenant un cadre (2) et un élément d'attache (4) pour attacher ledit cadre (2) à un tracteur, ledit cadre (2) portant au moins un premier élément de labour (6a) et au moins un second élément de labour (6b) qui sont mutuellement opposés et le cadre (2) étant fixé de manière rotative audit élément d'attache (4) autour d'un axe d'inversion (7a) afin d'inverser ledit cadre (2), ladite charrue (1) comprenant en outre une roue (9) qui est configurée pour ajuster une profondeur de travail de la charrue dans deux positions opérationnelles opposées de la roue (9), dans lesquelles ledit premier élément de labour (6a) et ledit second élément de labour (6b) sont opérationnels respectivement, un bras (11) qui, d'une part, supporte ladite roue (9) et, d'autre part, est relié de manière rotative à un support (13) dudit cadre (2) autour d'un axe d'oscillation (14a) qui est transversal par rapport audit axe d'inversion (7a) de sorte à permettre une oscillation dudit bras (11) entre la première et la seconde position opérationnelle de la roue (9), l'oscillation du bras (11) pendant l'inversion du cadre (2) étant ralentie au moyen d'un amortisseur (17), **caractérisée en ce que** ledit amortisseur (17) comprend un élément mobile (30) qui est relié cinématiquement audit bras (11) pendant l'inversion du cadre (2), ledit élément mobile (30) étant configuré pour coulisser le long d'un support (31) de l'élément mobile (30), lequel support (31) s'étend longitudinalement et les extrémités (32) duquel sont fixées rigidement audit support (13) dudit cadre (2) de sorte à ralentir l'oscillation du bras (11) pendant ladite inversion.

2. Charrue (1) selon la revendication 1, dans laquelle ledit support (31) est une tige (31A) et ledit élément mobile (30) est un manchon (30A) de ladite tige (31).

3. Charrue (1) selon la revendication 2, dans laquelle ledit manchon (30A) est étendu longitudinalement entre deux extrémités opposées, ladite tige (31A) passant à travers les deux extrémités opposées dudit manchon.

4. Charrue (1) selon l'une quelconque des revendications précédentes, dans laquelle lesdites extrémités (32) dudit support (31) sont opposées l'une à l'autre le long d'un axe coulissant (17a) dudit élément mobile (30) le long dudit support (31).

5. Charrue (1) selon l'une quelconque des revendications précédentes, dans laquelle le bras (11) est configuré pour tourner autour d'un axe de repositionnement (15a) qui est transversal à l'axe d'oscillation (14a) afin de déplacer la roue (9) entre une première position (15'), dans laquelle la roue (9) est configurée pour ajuster la profondeur de travail des éléments de labour (6a, 6b) et une seconde position (15"), dans laquelle la roue (9) est configurée pour supporter le cadre (2) dans une position de transport, l'élément mobile (30) étant susceptible de liaison cinématique au bras (11) de sorte à ralentir l'oscillation du bras (11) lorsque le bras est dans la première position (15') mais à ne pas la ralentir lorsque le bras est dans la seconde position (15").

6. Charrue (1) selon l'une quelconque des revendications précédentes, dans laquelle ledit élément mobile (30) est relié cinématiquement audit bras (11) pendant l'inversion du cadre (2) à travers un élément mécanique (22) qui est fixé de manière rotative autour dudit axe d'oscillation (14a), ledit élément mécanique (22) étant entraîné en rotation autour dudit axe d'oscillation (14a) par ledit bras (11) pendant l'inversion dudit cadre (2), ledit amortisseur (17) étant configuré de sorte à agir contre la rotation dudit élément mécanique (22) autour dudit axe d'oscillation (14a) de sorte à ralentir l'oscillation dudit bras (11) pendant ladite inversion.

7. Charrue (1) selon la revendication 6 lorsqu'elle dépend de la revendication 5, dans laquelle l'élément mécanique (22) comprend des premiers moyens de butée (24) qui sont configurés pour buter contre des seconds moyens de butée (25) du bras (11) de sorte à relier cinématiquement le bras (11) et l'élément mobile (30) lorsque le bras est dans la première position (15') alors que dans la seconde position (15"), lesdits premier et second moyens de butée (24, 25) ne sont pas susceptibles de butée mutuelle.

8. Charrue (1) selon la revendication 7, dans laquelle la rotation du bras (11) de la première position (15') dans la seconde position (15") déplace les seconds moyens de butée (25) loin des premiers moyens de butée (24) de sorte à empêcher leur butée mutuelle, alors que la rotation opposée amène les seconds moyens de butée (25) plus près des premiers moyens de butée (24) de sorte à permettre leur butée mutuelle.

9. Charrue (1) selon la revendication 7 ou 8, dans laquelle les premiers moyens de butée (24) comprennent au moins une dent faisant saillie de l'élément mécanique (22) et configurée pour s'engager en butée sur les seconds moyens de butée (25).

10. Charrue (1) selon l'une quelconque des revendications 7 à 9, dans laquelle les seconds moyens de butée (25) comprennent au moins une partie de butée faisant saillie du bras (11) à proximité de l'axe d'oscillation (14a), l'au moins une partie de butée étant configurée pour s'engager en butée sur les premiers moyens de butée (24).

11. Charrue (1) selon l'une quelconque des revendications précédentes, dans laquelle ledit axe coulissant (17a) est transversal audit axe d'inversion (7a) et/ou d'oscillation (14a), de préférence ledit axe coulissant (17a) étant perpendiculaire audit axe d'inversion (7a) et/ou d'oscillation (14a).

12. Charrue (1) selon l'une quelconque des revendications précédentes, dans laquelle ledit bras (11) pendant l'inversion du cadre (2) forme un levier qui est pivoté autour dudit axe d'oscillation (14a), ladite roue (9) et ledit amortisseur (17) étant configurés pour appliquer audit levier respectivement une force motrice de poids et une force résistante contre ladite force motrice de poids.

13. Charrue (1) selon l'une quelconque des revendications précédentes, comprenant en outre un premier dispositif d'arrêt (16a) et un second dispositif d'arrêt (16b) qui sont configurés de sorte à limiter l'oscillation du bras (11) dans lesdites première et seconde positions opérationnelles respectivement de sorte à définir une profondeur de travail correspondante de la charrue dans lesdites positions opérationnelles, lesdits premier et second dispositifs d'arrêt (16a, 16b) étant reliés à un premier élément oscillant (5a) et un second élément oscillant (5b) respectivement, lesdits premier et second éléments oscillants (5a, 5b) étant articulés audit support (13) et étant reliés cinématiquement l'un à l'autre de manière ajustable à travers un élément d'ajustement (19) qui est configuré pour transmettre un mouvement d'un des éléments oscillants (5a, 5b) à l'autre élément oscillant (5b, 5a) de sorte à ajuster symétriquement la profondeur de travail des éléments de labour opposés (6a, 6b).

14. Charrue (1) selon l'une quelconque des revendications précédentes, dans laquelle l'élément mobile (30) est relié cinématiquement au bras (11) à travers une broche de manoeuvre (27) qui est fixée au bras (11), de préférence dans laquelle la broche de manoeuvre (27) est configurée pour buter contre une fente (33) associée à l'élément mobile (30).

15. Charrue (1) selon la revendication 14, dans laquelle la broche de manoeuvre (27) est fixée au bras (11) sur le côté opposé par rapport à la roue (9), et/ou dans laquelle le bras (11) est relié au support (13) du cadre (2) par une seconde articulation (14) qui est configurée pour permettre l'oscillation du bras (11) autour de l'axe d'oscillation (14a), le support (31) de l'amortisseur (17) étant adjacent à une broche de la seconde articulation (14), sur la partie du bras (11) opposée à la roue (9).
